# EUROPÄISCHE PATENTSCHRIFT

(11) **EP 2 365 893 B1**
(45) Veröffentlichungstag und Bekanntmachung des Hinweises auf die Patenterteilung: **25.12.2013**
(21) Anmeldenummer: 11701387.0
(22) Anmeldetag: 20.01.2011
(51) Int. Cl.: B23Q 17/22, B23Q 11/00

(54) **VERFAHREN ZUR BESTIMMUNG DER POSITION EINES WERKZEUGES**
METHOD FOR DETERMINING THE POSITION OF A TOOL
PROCÉDÉ DE DÉTERMINATION DE LA POSITION D'UN OUTIL

(30) Priorität: 28.01.2010 DE 102010006504
(43) Veröffentlichungstag der Anmeldung: 21.09.2011
(73) Patentinhaber: Chiron-Werke GmbH & Co. KG, 78532 Tuttlingen (DE)
(72) Erfinder: PRUST, Dirk, 78532 Tuttlingen (DE)
(74) Vertreter: Witte, Weller & Partner
(86) Internationale Anmeldenummer: PCT/EP2011/050742
(87) Internationale Veröffentlichungsnummer: WO 2011/092104

(56) Entgegenhaltungen:
- WO-A1-97/30826
- WO-A1-97/46925
- WO-A1-99/67066
- WO-A1-2005/019769
- DE-A1- 19 743 149
- DE-A1- 19 947 374
- DE-A1-102005 000 732

## Beschreibung

Die vorliegende Erfindung betrifft ein Verfahren zur Bestimmung der Position eines Werkzeuges in einer Werkzeugmaschine, die einen Werkstückträger sowie einen über Konstruktionselemente relativ zu dem Werkstückträger und zu einem Maschinenteil verfahrbaren Werkzeugträger aufweist, in den das Werkzeug zur Bearbeitung eines von dem Werkstückträger getragenen Werkstückes eingespannt ist, wobei an dem Werkzeugträger ein werkzeugnaher Messpunkt und an dem Maschinenteil zumindest zwei weitere Messpunkte vorgesehen sind, die relative Position der weiteren Messpunkte zu einem Koordinatenursprungspunkt bekannt ist, und die Position des werkzeugnahen Messpunktes zu dem Koordinatenursprungspunkt bestimmt wird.

Die vorliegende Erfindung betrifft ferner eine Werkzeugmaschine, die einen Werkstückträger sowie einen über Konstruktionselemente relativ zu dem Werkstückträger und einem Maschinenteil verfahrbaren Werkzeugträger aufweist, in den ein Werkzeug zur Bearbeitung eines von dem Werkstückträger getragenen Werkstückes eingespannt ist.

Derartige Verfahren und Werkzeugmaschinen sind beispielsweise aus der DE 198 53 757 C2 sowie der DE 197 43 149 A1 bekannt.

Beide Druckschriften beschreiben Werkzeugmaschinen, bei denen ein auch Spindelstock genannter Spindelkopf über Konstruktionselemente in Form von Koppelgetrieben in einer Ebene relativ zu einem Werkstückträger verfahren wird. Die Koppelgetriebe sind mit einem Längenmaßstab verbunden, über den die Lage des jeweiligen Konstruktionselementes gemessen wird, um die Spindelköpfe während der Bearbeitung positionieren zu können.

Das jeweilige Messsystem ist bei beiden bekannten Werkzeugmaschinen unmittelbar im Arbeitsraum der Werkzeugmaschine angeordnet und den dort vorherrschenden Verschmutzungen ausgesetzt.
Aus der WO 99/67066 A1 ist ein Robotersystem bekannt, bei dem Längenmesssysteme in die Teleskoparme integriert sind, die die Arme des Roboters bewegen.
Aus der WO 97/30826 A1 ist ein Positionierverfahren bekannt, bei dem mit Hilfe optischer Verfahren die Lage eines im Raum positionierbaren Teiles bestimmt wird.
Die WO 97/46925 A1 beschreibt den nächstkommenden Stand der Technik gemäß dem Oberbegriffen der Ansprüche 1 und 8 mit einem System, bei dem zwei Laserinterferometer eingesetzt werden, um die Lage eines Bearbeitungskopfes im Raum zu bestimmen.
Die WO 2005/019769 A1 beschreibt ein Verfahren zur Ermittlung von geometrischen Abweichungen von technischen Mehrkörpersystemen, bei dem nacheinander Messpunkte angefahren werden, die nicht alle in einer Ebene liegen dürfen.

Bei einem aus der DE 103 30 915 A1 bekannten Verfahren ist im Arbeitsraum einer Werkzeugmaschine ein gesondertes Messsystem in Form einer Laserlichtschranke vorgesehen, die schräg zu den linearen Fahrachsen des Spindelkopfes angeordnet ist. In den Spindelkopf wird zu bestimmten Zeitpunkten ein Messwerkzeug eingespannt, mit dem die Lichtschranke dann parallel zu den Fahrachsen angefahren und die Position des Spindelkopfes bestimmt wird, wenn die Lichtschranke unterbrochen wird. Die so gemessenen Ist-Werte werden mit von der Steuerung vorgegebenen Soll-Werten verglichen und daraus Korrekturwerte berechnet, die die Steuerung bei der Vergabe neuer Soll-Werte berücksichtigt.

Auch dieses Verfahren wird auf einer Werkzeugmaschine durchgeführt, bei der das Messsystem unmittelbar im Arbeitsraum angeordnet ist.

Bei allen insoweit beschriebenen Verfahren und Werkzeugmaschinen ist von Nachteil, dass das Messsystem im Arbeitsraum angeordnet ist, wo es den Verschmutzungen durch die spanabhebende Bearbeitung sowie das Kühlschmiermittel ausgesetzt ist. Bei der Werkzeugmaschine aus der DE 103 30 915 A1 ist zusätzlich von Nachteil, dass die Positionsbestimmung nicht hauptzeitparallel erfolgen kann, also nicht gleichzeitig mit der Bearbeitung von Werkstücken, sondern dass die Bearbeitung hierzu unterbrochen werden muss.

Bei den bekannten Werkzeugmaschinen wird die Genauigkeit der Bearbeitung insbesondere durch thermische Verlagerungen beeinflusst, die vor allem an der Hauptspindel und an dem Messsystem selbst auftreten. Hauptursache für diese thermischen Verlagerungen sind zum einen Ausdehnungen an Motoren, Kugelrollspindeln, Linearführungen sowie dem Hauptspindellager.

Zum anderen beeinflussen auch Verformungen durch ungleichmäßige Erwärmung unterschiedlicher Maschinenkomponenten die Bearbeitungsgenauigkeit.

Ursache für diese thermischen Verlagerungen sind interne und externe Wärmequellen, wobei den externen Wärmequellen durch temperierte Räume und Anordnung der Werkzeugmaschine so, dass sie nicht direkt der Sonne ausgesetzt sind, begegnet werden kann.

Die internen Wärmequellen sind im Wesentlichen die wärmeerzeugenden Maschinenkomponenten, deren Eigenerwärmung sich bis zum Erreichen der Betriebstemperatur unterschiedlich auswirken kann. Hierzu zählen die Spindelrotation, interne Reibungen und vor allem auch der Zerspanungsprozess selbst sowie die dabei entstehenden heißen Metallspäne und das zugeführte Kühlschmiermittel.

All diese Faktoren beeinflussen das thermische Verhalten der Werkzeugmaschine und müssen reduziert werden, um entsprechende Bearbeitungsgenauigkeiten zu erzielen.

Diese Faktoren können dabei entweder konstruktiv reduziert oder steuerungstechnisch kompensiert werden, wozu direkte und indirekte Verfahren verwendet werden.

Ein Beispiel für die konstruktive Reduzierung der durch das thermische Verhalten bedingten Genauigkeitsprobleme ist in der DE 103 43 320 A1 beschrieben, wo bestimmte Konstruktionselemente temperiert werden.

Bei der direkten Kompensation wird die tatsächliche, also die Ist-Position der Hauptspindel über ein gesondertes Messsystem gemessen und mit der durch die Steuerung jeweils aktuell vorgegebenen Soll-Position verglichen. Die ermittelte Abweichung wird in der Steuerung verwendet, um die Wegsteuerbefehle zu korrigieren.

Ein derartiges Verfahren ist beispielsweise aus der eingangs erwähnten DE 103 30 915 A1 bekannt.

Dieses Verfahren ist zwar sehr genau, für den Messvorgang muss jedoch der Fertigungsprozess unterbrochen werden, die Messung erfolgt also nicht hauptzeitparallel. Als weiteres Problem ist anzusehen, dass eine Unterbrechung des Fertigungsprozesses bei bestimmten Fertigungsschritten nicht möglich ist. Sofern diese Fertigungsschritte lange andauern, kann während dieser Zeitspanne keine Kompensation erfolgen.

Bei der indirekten Konzentration werden die thermisch bedingten Abweichungen in der Position der Hauptspindel zu dem Werkstück mit Hilfe eines mathematischen Modells aus gemessenen Hilfsgrößen wie der Temperatur an verschiedenen Punkten in der Werkzeugmaschine berechnet und in der Steuerung zur Kompensation verwendet.

Dieses Verfahren ist beispielsweise aus der DE 103 44 903 U bekannt.

Diese Messungen sind zwar hauptzeitparallel möglich, erfordern aber umfangreiche Messungen zur Ermittlung der Parameter, die in das mathematische Modell eingehen. Zudem bildet das mathematische Modell den tatsächlichen Betriebszustand häufig nur unvollständig ab, so dass diese Verfahren nicht so genau sind wie die oben erwähnte direkte Kompensation.

Die wesentlichen Nachteile des insoweit beschriebenen Standes der Technik liegen also darin, dass zum einen die Messsysteme den Verschmutzungen und sonstigen Belastungen des Arbeitsraumes ausgesetzt sind, wobei die Messungen häufig auch nicht hauptzeitparallel erfolgen können.

All dies führt dazu, dass nach wie vor ein Bedarf an neuen Werkzeugmaschinen und neuen Verfahren besteht, um die Position des Werkzeuges relativ zu dem Werkstück genau bestimmen zu können, ohne dass thermische Verlagerungen diese Genauigkeit beeinflussen.

Vor diesem Hintergrund liegt der vorliegenden Erfindung die Aufgabe zugrunde, die eingangs genannten Verfahren sowie die eingangs genannte Werkzeugmaschine derart weiterzubilden, dass bei geringem konstruktivem Aufwand eine zuverlässige, schnelle Positionsbestimmung für den Werkzeugträger möglich wird, die hauptzeitparallel durchgeführt werden und in bestehende Werkzeugmaschinen nachgerüstet werden kann.

Bei dem eingangs genannten Verfahren zur Bestimmung der Position eines Werkzeuges wird diese Aufgabe dadurch gelöst, dass mit Hilfe von zumindest zwei Längenmesssystemen, der lineare Abstand zwischen dem werkzeugnahen Messpunkt und jedem der weiteren Messpunkte gemessen und aus diesen Abständen sowie der bekannten relativen Position der weiteren Messpunkte die Position des werkzeugnahen Messpunktes zu dem Koordinatenursprungspunkt bestimmt wird, und zumindest einem Längenmesssystem ein Fadenelement zugeordnet ist, das an dem werkzeugnahen Messpunkt festgelegt ist und sich zu dem jeweiligen weiteren Messpunkt erstreckt, wobei die sich jeweils ergebende Länge des Fadenelementes zwischen dem werkzeugnahen Messpunkt und dem jeweiligen weiteren Messpunkt gemessen wird, wobei vorzugsweise an dem weiteren Messpunkt das Fadenelement umgelenkt und zu dem Längenmesssystem geführt wird.

Bei der eingangs genannten Werkzeugmaschine wird diese Aufgabe dadurch gelöst, dass zumindest zwei Längenmesssysteme vorgesehen sind, die unmittelbar den linearen Abstand zwischen einem werkzeugnahen Messpunkt an dem Werkzeugträger und je einem weiteren Messpunkt an dem Maschinenteil erfassen, und zumindest einem Längenmesssystem ein Fadenelement zugeordnet ist, das an dem werkzeugnahen Messpunkt festgelegt ist und sich zu dem jeweiligen weiteren Messpunkt erstreckt, wobei die sich jeweils ergebende Länge des Fadenelementes zwischen dem werkzeugnahen Messpunkt und dem jeweiligen weiteren Messpunkt gemessen wird, wobei vorzugsweise an dem weiteren Messpunkt das Fadenelement umgelenkt und zu dem Längenmesssystem geführt wird.
Durch die Verwendung eines Fadens oder Drahtes, vorzugsweise eines dehnungsarmen Drahtes aus Invar oder Kevlar, kann der Maßstab außerhalb des Arbeitsraumes liegen, so dass weit weg vom Spanungsgeschehen gemessen werden kann. Der Draht wird dabei beispielsweise durch eine Feder auf Spannung gehalten.

Die Erfinder der vorliegenden Anmeldung haben nämlich erkannt, dass das Hauptproblem im Stand der Technik darin besteht, dass dort mit den Längenmesssystemen die Korrekturwerte ermittelt werden, mit denen die Steuerung auch ansonsten arbeitet. Ein weiteres Problem besteht nach Erkenntnis der Erfinder darin, dass die Messung nicht an einem werkzeugnahen Punkt sondern entweder an den Führungen oder an verschiedenen Punkten am Spindelkopf erfolgt, was nicht mit hinreichender Genauigkeit möglich ist.

Erfindungsgemäß wird nun die Position des Werkzeuges relativ zu einem Maschinenteil, das beispielsweise der x-Schlitten sein kann, dadurch bestimmt, dass mit einem gesonderten Messsystem der Abstand zwischen einem Punkt nahe am Werkzeug und zwei voneinander getrennten Punkten an dem Maschinenteil gemessen wird. Diese Messung erfolgt mit Hilfe von Längenmesssystemen, die von den Konstruktionselementen verschieden sind, was zu einer Entkopplung der Messung einerseits und der Steuerung der Verfahrwege des Werkzeuges andererseits führt.

Unter einem "Längenmesssystem wird im Rahmen der vorliegenden Erfindung ein Messsystem verstanden, das den kürzesten Abstand zwischen zwei Punkten im Raum misst, also sozusagen die Länge der Luftlinie zwischen diesen beiden Punkten.

Unter einem "werkzeugnahen Messpunkt" wird im Rahmen der vorliegenden Anmeldung ein Messpunkt verstanden, der geometrisch so nahe bei dem Werkzeug liegt, und nur minimalen, vorzugsweise keinen thermischen Verlagerungen gegenüber dem Werkzeug bzw. dem Werkzeugträger ausgesetzt ist, so dass eine feste Beziehung zwischen der Position der Messpunktes und der Position des Werkzeuges besteht. Dieser Messpunkt kann an der Hauptspindel oder unmittelbar dort vorgesehen sein, wo die Hauptspindel aus dem sie tragenden Konstruktionselement austritt.

Wenn die Position der beiden weiteren Messpunkte relativ zu dem Koordinatenursprung bekannt ist, kann die Lage des Messpunktes im Raum bestimmt und daraus die Verlagerung des Werkzeuges gegenüber dem Werkstück bzw. dem das Werkstück tragenden Werkstückträger bestimmt werden.

Ein besonderer Vorteil bei dem neuen Verfahren liegt darin, dass der Abstand zwischen den beiden weiteren Messpunkten sowie einem Punkt bestimmt wird, der nahe am Werkzeug liegt, wo der Verfahrweg ein anderer ist als unmittelbar an den Führungen, wo Systeme im Stand der Technik messen.

Ein weiterer Vorteil ist darin zu sehen, dass im Arbeitsraum vorhandene Verschmutzungen nicht die Probleme bereiten, wie sie bei Laserlichtschranken anzutreffen sind.

Die beiden Messpunkte können dabei so an dem Maschinenteil angeordnet werden, dass sie das mögliche Verlagerungsschicksal dieses Maschinenteiles nicht teilen. Die beiden Messpunkte können z.B. auf einer steifen Platte angeordnet sein, die thermisch entkoppelt und spannungsfrei beispielsweise an dem x-Schlitten oder auch an dem Untergestell selbst befestigt ist.

Wichtig ist hier vor allem, dass der Abstand der beiden Messpunkte zueinander und die absolute Position zumindest eines dieser Messpunkte bekannt ist und durch das thermische Verhalten der Werkzeugmaschine selbst nicht verändert wird.

Das neue Verfahren wird somit unabhängig von der Steuerung durchgeführt, es ersetzt die Steuerung nicht, sondern dient nur zur Kompensation von Verlagerungen, wobei es auch eingesetzt werden kann, um Verlagerungen nach einem Crash zu bestimmen.

Das neue Verfahren und die neue Werkzeugmaschine ermöglichen es erstmals, kontinuierlich oder sporadisch oder zu bestimmten Zeitpunkten während der Bearbeitung eines Werkstückes über ein gesondertes Messsystem die Ist-Position des Werkzeuges unabhängig von den Konstruktionselementen zu bestimmen, über die der Werkzeugträger relativ zu dem Werkstückträger verfahren wird.

Das Verfahren kann als zusätzliche Kontrolle für die Position des Werkzeugträgers verwendet und kontinuierlich durchgeführt werden, wobei es auch dazu verwendet werden kann, die Werkzeugmaschine zu führen, also die übliche Maschinensteuerung zu ergänzen oder zu überwachen.

Das Verfahren kann aber auch nur zu bestimmten Zeitpunkten durchgeführt werden, wenn beispielsweise an einer bestimmten Positionen während der Bearbeitung ein besonders genauer Bearbeitungsschritt durchgeführt werden muss. Das erhöht die Genauigkeit, z.B. der Position einer Bohrung, und kann auch verwendet werden, um die Wiederholgenauigkeit an bestimmten Punkten des Werkstückes zu bestimmen oder zu optimieren.

Es kann aber auch während eines automatischen Werkzeugwechsels durchgeführt werden, um immer zu diesen Zeitpunkten die Werkzeugmaschine auf Verlagerungen hin zu überprüfen, die sich durch thermische Ausdehnungen oder Lastveränderungen ergeben, und die Folgen derartiger Verlagerungen zu kompensieren.

Die dabei verwendeten Längenmesssysteme liegen ferner nicht im Kraftfluss der Werkzeugmaschine, sind also losgelöst vom Kraftübertragungssystem der Werkzeugmaschine, was die Messgenauigkeit erhöht.

Die der Erfindung zugrunde liegende Aufgabe wird auf diese Weise daher vollständig gelöst.

Wenn nur zu bestimmten Zeitpunkten die Position des werkzeugnahen Messpunktes bestimmt wird, beispielsweise auch beim Werkzeugwechsel, müssen lediglich kleine Abweichungen vom Soll-Wert erfasst werden, was eine einfache Messung und Mathematik und damit eine schnelle Erfassung der Abweichungen zwischen Soll-Wert und Ist-Wert ermöglicht.

Das neue Verfahren wird besonders vorteilhaft eingesetzt, um thermische Verlagerungen erkennen und kompensieren zu können. Dabei handelt es sich um ein direktes Kompensationsverfahren, da die Ist-Position direkt gemessen wird, was zu einer hohen Genauigkeit führt.

Das Verfahren wird dabei unabhängig von der üblichen Verfahrmechanik durchgeführt und erfolgt wegen der gesonderten Längenmesssysteme hauptzeitparallel.

Vor diesem Hintergrund betrifft die vorliegende Erfindung auch ein Verfahren zur Bestimmung von Verlagerungen, bspw. infolge thermischer Ausdehnungen oder Lastveränderungen, bei einer Werkzeugmaschine, die einen Werkstückträger sowie einen über Konstruktionselemente relativ zu dem Werkstückträger und einem Maschinenteil verfahrbaren Werkzeugträger aufweist, in den ein Werkzeug zur Bearbeitung eines von dem Werkstückträger getragenen Werkstückes eingespannt ist, bei dem zu bestimmten Zeitpunkten während der Bearbeitung des Werkstückes die Position des Werkzeugträgers gemäß dem neuen Verfahren bestimmt und die so bestimmte Ist-Position mit einer Soll-Position verglichen wird, wobei vorzugsweise zu den bestimmten Zeitpunkten ein Werkzeugwechsel durchgeführt oder ein Bearbeitungsvorgang, bspw. eine Bohrung, begonnen wird.

Die der Erfindung zugrunde liegende Aufgabe wird auch auf diese Weise vollständig gelöst.

Dabei ist es bevorzugt. wenn der Werkzeugträger in einer durch die Messpunkte aufgespannten Ebene relativ zu dem Maschinenteil verfahrbar ist, wobei vorzugsweise der Werkzeugträger zusammen mit dem Maschinenteil senkrecht zu der durch die Messpunkte aufgespannten Ebene relativ zu dem Werkstückträger verfahrbar ist und zwei Längenmesssysteme vorgesehen sind.

Bei dieser Maßnahme ist von Vorteil, dass sich die Ist-Position mit einfachen mathematischen Formeln beschreiben und folglich schnell berechnen lässt. Die beiden weiteren Messpunkte werden dann z.B. bei einer Fahrständermaschine am x-Schlitten angeordnet, indem dort das Maschinenteil z.B. thermisch entkoppelt befestigt wird. Damit wird die Ist-Position in der y/z-Ebene bestimmt, was für die meisten Anwendungsfälle ausreicht.

Alternativ ist es bevorzugt, wenn das Maschinenteil gegenüber dem Werkstückträger unverschieblich an der Werkzeugmaschine angeordnet ist und drei Längenmesssysteme vorgesehen sind.

Wenn die Längenmesssysteme nicht mitfahren, wird ein dritter Abstand benötigt, wozu das Maschineteil im Falle einer Fahrständermaschine am Untergestell angeordnet werden kann.

Insgesamt ist es bevorzugt, wenn der Werkzeugträger relativ zu dem Werkstückträger in drei orthogonalen Achsen jeweils linear verfahrbar ist.

Dies führt für das Verfahren des Werkzeuges zu einer seriellen Kinematik, beispielsweise einer Fahrständermaschine, bei der die Achsen aufeinander aufbauen. Getrennt davon gibt es die Längenmesssysteme für die parallelkinematische Positionsmessung, die voneinander entkoppelt sind.

Dabei ist es bevorzugt, wenn die Längenmesssysteme zumindest teilweise an dem Maschinenteil angeordnet sind.

Diese Maßnahme ist konstruktiv von Vorteil, denn es müssen keine gesonderten Montagestellen für die Längenmesssysteme bereitgestellt werden. Damit könne auch bestehende Werkzeugmaschine erfindungsgemäß umgerüstet oder nachgerüstet werden.

Schließlich ist es bevorzugt, wenn zumindest ein Längenmesssystem einen Seilzugsensor umfasst.

Dies ist eine konstruktiv vorteilhafte Ausgestaltung der Längenmesssysteme, die kommerziell im Handel verfügbar sind.

Dann ist es bevorzugt, wenn das Maschinenteil thermisch von der Werkzeugmaschine entkoppelt ist.

Hier ist von Vorteil, dass der für die Messgenauigkeit entscheidende Abstand zwischen den weiteren Messpunkten (A, B, C) nicht das thermische Schicksal der Werkzeugmaschine teilt.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: die neue Werkzeugmaschine in schematischer Seitenansicht, wobei ein Messpunkt nahe an dem Werkzeugträger und zwei weitere Messpunkte über ein Maschinenteil an dem x-Schlitten angeordnet sind;
- Fig. 2: eine schematische Darstellung, wie bei der Werkzeugmaschine aus Fig. 1 aus den gemessenen Abständen zwischen dem Messpunkt nahe an dem Werkzeugträger und den beiden weiteren Messpunkten die relative Lage des Messpunktes S zu dem Koordinatenursprung bestimmt wird;
- Fig. 3: ein erstes Ausführungsbeispiel für ein Längenmesssystem, mit dem der Abstand zwischen dem Messpunkt S und dem Messpunkt A bestimmt wird;
- Fig. 4: ein weiteres Ausführungsbeispiel für das Längenmesssystem; und
- Fig. 5: eine Darstellung wie Fig. 1, wobei jedoch drei weitere Messpunkte an dem Maschinenteil angeordnet sind, das jetzt an dem Untergestellt befestigt ist.

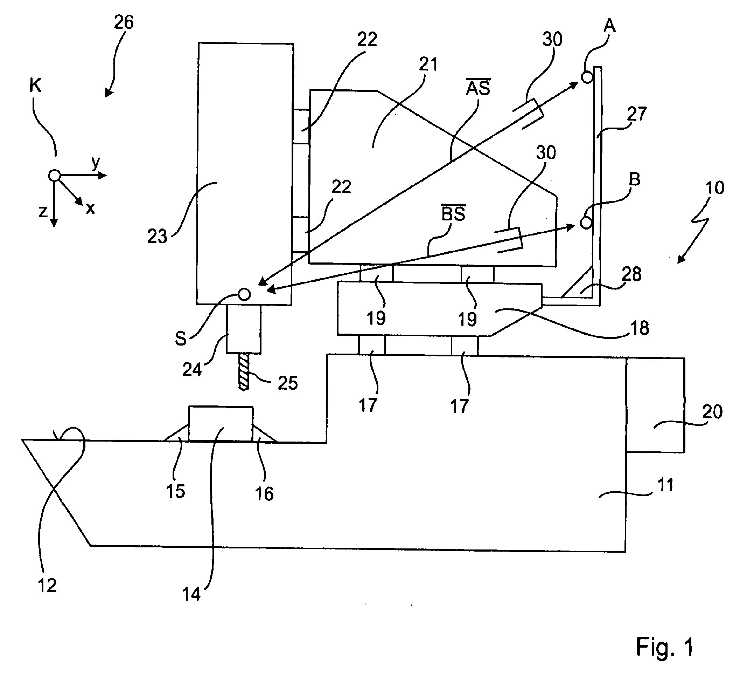

In Fig. 1 ist in schematischer Seitenansicht eine Werkzeugmaschine 10 dargestellt, die als vertikale Fahrständermaschine ausgebildet ist. Die neue Werkzeugmaschine kann auch als horizontale Fahrständermaschine, in Portalbauweise oder in einer der anderen üblichen Bauarten vorliegen, die vertikale Fahrständermaschine dient hier lediglich zur Erläuterung der Erfindung.

Die Werkzeugmaschine 10 umfasst ein Untergestell 11, das aus einem versteiften Stabwerk oder Polymerbeton gefertigt sein kann. An dem Untergestell 11 ist als Werkstückträger ein schematisch angedeuteter Werkstücktisch 12 ausgebildet, auf dem in Fig. 1 ein Werkstück 14 zu erkennen ist, das über Spannmittel 15 und 16 auf den Werkstücktisch 12 aufgespannt ist.

An dem Untergestell 11 ist über Linearführungen 17 ein x-Schlitten 18 angeordnet, der in die Zeichenebene der Figur hinein- bzw. aus ihr herausfahren kann, was der x-Achse der Werkzeugmaschine 10 entspricht.

Auf dem x-Schlitten 18 sind Führungsschuhe 19 angeordnet, in denen ein Ständer 21 quer zu der x-Richtung, also in y-Richtung, gegenüber dem Untergestell 11 verfahren werden kann.

Der Ständer 21 trägt an seiner Vorderseite Führungen 22, an denen ein Spindelstock 23 quer zur x-Richtung sowie quer zur y-Richtung, also in z-Richtung relativ zu dem Untergestell 11 verfahren werden kann.

Der Spindelstock 23 trägt in an sich bekannter Weise eine drehangetriebene Hauptspindel 24, die als Werkzeugträger dient und in die ein Werkzeug 25 zur Bearbeitung des Werkstückes 14 eingespannt ist.

Linearführungen 17, x-Schlitten 18, Führungsschuhe 19, Ständer 21, Führungen 22 und Spindelstock 23 sind Konstruktionselemente, die mit eigenen Antrieben und Linearmaßstäben oder sonstigen Messsystemen versehen sind, um mit Hilfe einer bei 20 angedeuteten Maschinensteuerung den Werkzeugträger gegenüber dem Werkstückträger gezielt verfahren und die Position des jeweiligen Konstruktionselementes regeln zu können.

Auf die insoweit beschriebene Art und Weise kann also das Werkzeug 25 relativ zu dem Werkstück 14 in drei zueinander orthogonalen Achsen verfahren werden, wie es durch ein bei 26 angedeutetes Koordinatenkreuz gezeigt ist. Das Koordinatenkreuz 26 definiert einen Koordinatenursprungspunkt K, relativ zu dem die Position des Werkstückes 14 bekannt ist und die Position des Werkzeuges 25 unter der Kontrolle der Maschinensteuerung 20 jeweils über die Konstruktionselemente 18, 21, 23 aktuell angefahren wird.

Im Betrieb der Werkzeugmaschine 10 kommt es nun zu thermischen Verlagerungen, wie sie eingangs bereits erwähnt wurden. Diese thermischen Verlagerungen führen dazu, dass die Soll-Position des Werkzeuges 25 zu dem Koordinatenursprungspunkt K von der tatsächlichen Ist-Position abweicht, so dass die Bearbeitung des Werkstückes 14 nicht mit der erforderlichen Genauigkeit und Wiederholbarkeit erfolgen kann.

Um diese thermischen Verlagerungen kompensieren zu können, weist die Werkzeugmaschine 10 zusätzlich zu den Konstruktionselementen 18, 21, 23 ein weiteres, gesondertes Messsystem mit zwei Längenmesssystemen auf, mit denen die Abstände zwischen einem werkzeugnahen Messpunkt S und zwei weiteren Messpunkten A und B bestimmt werden können. Wie in Fig. 1 zu erkennen, ist der werkzeugnahe Messpunkt S an dem Spindelstock 23 unmittelbar dort angeordnet, wo die Hauptspindel 24 aus dem Spindelstock 23 nach unten austritt. Auf diese Weise ist der Messpunkt S so dicht wie möglich an dem Werkzeug 25 gelegen, so dass die aktuelle Position des Messpunktes S der Position des Werkzeuges 25 entspricht bzw. aus ihr die Position des Werkzeuges 25 abgeleitet werden kann.

Die Messpunkte A und B sind an einem als steife Platte 27 ausgebildetem Maschinenteil vorgesehen, das über einen Winkel 28 steif aber thermisch entkoppelt an dem x-Schlitten 18 befestigt ist. Auf diese Weise fahren die Messpunkte A und B mit dem x-Schlitten 18 mit, teilen aber nicht sein thermisches "Verlagerungsschicksal".

Über zwei, in Fig. 1 bei 30 lediglich angedeutete Längenmesssysteme wird jetzt der Abstand A̅S̅ zwischen dem Messpunkt S und dem Messpunkt A sowie der Abstand B̅S̅ zwischen dem Messpunkt S und dem Messpunkt B bestimmt. Die beiden Längenmesssysteme 30 sind an der Platte 27 angebracht, so dass sie sich außerhalb des Arbeitsbereiches des Werkzeuges 25 befinden.

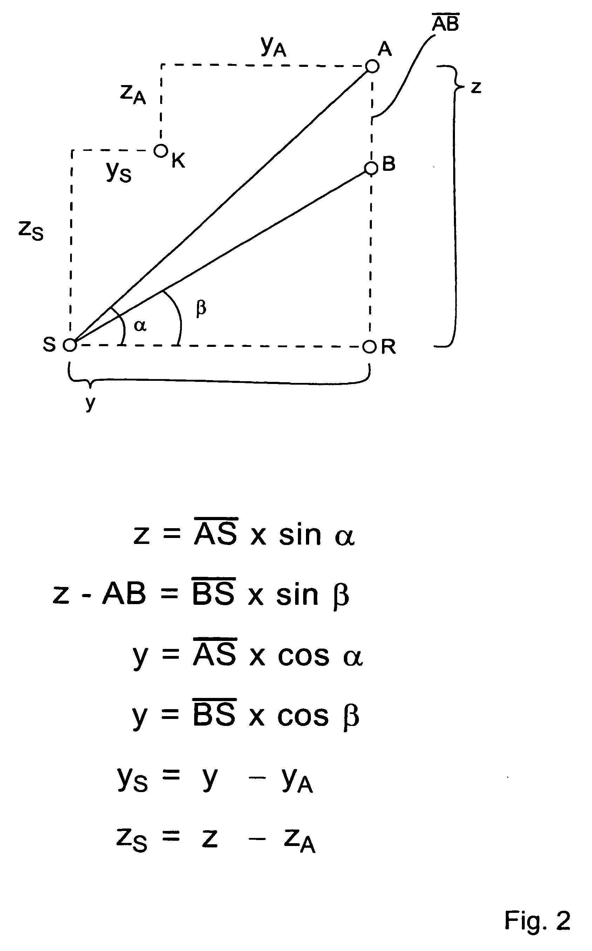

Da der Abstand zwischen dem Messpunkt A und dem Messpunkt B bekannt ist, kann anhand der gemessenen Längen A̅S̅ und B̅S̅ die relative Position des Messpunktes S zu dem Messpunkt A bestimmt werden. Da die relative Position des Messpunktes A zu dem Koordinatenursprungspunkt K ebenfalls bekannt ist, lässt sich auf diese Weise die relative Position des Messpunktes S zu dem Koordinatenursprungspunkt K bestimmen, wie es jetzt anhand von Fig. 2 kurz erörtert werden soll.

In Fig. 2 oben ist schematisch der geometrische Zusammenhang zwischen dem Messpunkt S, den beiden Messpunkten A und B sowie dem Koordinatenursprungspunkt K dargestellt.

Der Messpunkt S und die Messpunkte A und B spannen zusammen mit einem imaginären Punkt R zwei rechtwinklige Dreiecke auf, deren Ankathete y für beide Dreiecke gleich ist, während die Gegenkathete z sich um den bekannten Abstand A̅B̅ unterscheidet.

Unten in Fig. 2 ist dargestellt, dass über die normale Sinusfunktion sowie Kosinusfunktion vier Gleichungen erstellt werden können, in denen die Winkel α und β sowie die Strecken y und z nicht bekannt sind, während die drei Abstände A̅S̅, B̅S̅ und A̅B̅ bekannt sind bzw. gemessen werden.

Damit handelt es sich um ein eindeutig bestimmtes geometrisches System, so dass die Strecken y und z berechnet werden können.

In Fig. 2 ist ebenfalls die relative Position des Messpunktes A sowie des Messpunktes S zu dem Koordinatenursprungspunkt K dargestellt.

Da die relative Position des Messpunktes A zu dem Koordinatenursprungspunkt K bekannt ist, lässt sich nunmehr die relative Position des Messpunktes S zu dem Koordinatenursprungspunkt K durch die beiden unteren Gleichungen in Fig. 2 bestimmen.

Diese relative Position entspricht der tatsächlichen Ist-Position des Messpunktes S, die nun mit der durch die Steuerung vorgegebenen Soll-Position verglichen und zur Bestimmung von Korrekturwerten verwendet werden kann, die die Steuerung dann beim weiteren Prozess berücksichtigt.

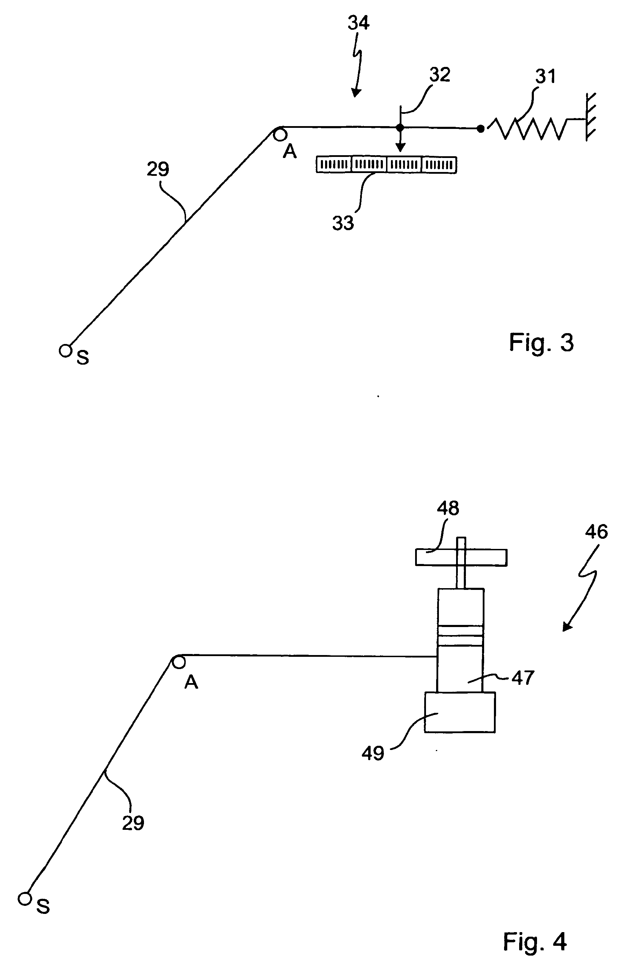

Für die Bestimmung der Abstände A̅S̅ und B̅S̅ können verschiedene Längenmesssysteme 30 verwendet werden, wie sie jetzt beispielhaft anhand der Fig. 3 bis 6 beschrieben werden sollen.

In Fig. 3 verwendet das Längenmesssystem 30 einen Faden oder Draht 29, der an dem Messpunkt S befestigt ist und über den Messpunkt A umgelenkt wird, so dass er zu einer Feder 31 gelangt, die den Faden 29 straff spannt. Wenn sich der Messpunkt S bewegt, dehnt sich die Feder 31 entsprechend aus oder zieht sich zusammen.

Der Faden oder Draht 29 ist aus einem längeninvarianten Material wie Invar oder Kevlar gefertigt, so dass er sich weder bei Zugbelastung noch bei Temperaturänderungen hinsichtlich seiner Länge verändert.

Zwischen dem Umlenkpunkt A und der Feder 31 ist an dem Faden oder Draht 29 ein Messzeiger 32 angeordnet, der mit einem Maßstab 33 zusammenwirkt. Bei Bewegung des Messpunktes S verfährt somit der Messzeiger 32 gegenüber dem Längenmaßstab 33. Wenn der Abstand des Maßstabes 33 von dem Messpunkt A bekannt ist, kann nun mit Hilfe des Längenmaßstabes 33 der lineare Abstand zwischen den Messpunkten S und A bestimmt werden, wenn auch die gesamte Länge des Fadens oder Drahtes 29 zwischen dem Messpunkt S und dem Messzeiger 32 bekannt ist.

Messzeiger 32 und Längenmaßstab 33 bilden zusammen ein lineares Messsystem. Für derartige lineare Messsysteme kommen optische Messsysteme in Frage, die einen Stahl- oder Glasmaßstab verwenden, Linearpotentiometer, die als Spannungsteiler betrieben werden, induktive Wegaufnehmer, bei denen ein metallischer Stößel in einem Spulenpaket läuft, Magnetbandsensoren, bei denen ein Magnetband mit hochauflösender magnetischer Strukturierung abgetastet wird, sowie beispielsweise Laserabstandsmesser.

Wichtig bei dem Linearmesssystem 34 ist dabei, dass es außerhalb des Arbeitsraumes angeordnet wird. Der Messpunkt und Umlenkpunkt A sowie die Länge des Fadens oder Drahtes 29 zwischen dem Umlenkpunkt A und dem Messzeiger 32 lässt eine beliebige Positionierung des Linearmesssystems 34 zu.

Ein weiteres Längenmesssystem ist in Fig. 4 gezeigt. Dieses Längenmesssystem verwendet einen so genannten Seilzugsensor 46, der die Länge des bereits aus Fig. 3 bekannten Fadens oder Drahtes 29 bestimmt.

Der Seilzugsensor 46 ist auch kommerziell erhältlich, er umfasst eine Trommel 47, auf die der Faden oder Draht 29 aufgewickelt wird, sowie eine Torsionsfeder 48, über die der Faden oder Draht 29 gespannt wird. Mit der Trommel 47 ist ein Drehgeber 49 verbunden, der die Drehung der Trommel 47 erfasst, wenn der Messpunkt S bewegt wird.

Wenn der Abstand zwischen dem Umlenkpunkt A und dem Seilzugsensor 46 sowie die Länge des Fadens oder Drahtes 29 bekannt sind, lässt sich somit jederzeit der lineare Abstand zwischen den Messpunkten S und A bestimmen.

Bei der in Fig. 1 gezeigten Werkzeugmaschine wird die Position des Messpunktes S in der y/z-Ebene bestimmt, da die weiteren Messpunkte A und B mit dem x-Schlitten 18 mitfahren. Es hat sich gezeigt, dass diese Messungen für die Kompensation thermischer Verlagerungen ausreichend sind, weil die Werkzeugmaschine symmetrisch zur y/z-Ebene aufgebaut ist. Mit anderen Worten, es gibt keine Kippmomente in x-Richtung, wobei die Verfahrgenauigkeit in x-Richtung auch genauer ist als in y- und z-Richtung, weil der x-Schlitten 18 durch eine Kugelgewindespindel bewegt wird, die durch einen Glasmaßstab kompensiert wird.

Sollte dennoch auch eine Kompensation in x-Richtung erforderlich sein, kann das in Fig. 1 gezeigte Messsystem dadurch ausgeweitet werden, dass die Platte 27 nicht an dem x-Schlitten 18 sondern an dem Untergestell 11 befestigt wird. Wenn jetzt der Spindelstock 23 gegenüber dem Untergestell 11 verfahren wird, so ändert sich der Abstand zwischen dem Messpunkt S einerseits und den Messpunkten A und B andererseits in allen drei Dimensionen, so dass eine weitere Unbekannte bestimmt werden muss. Dies lässt sich dadurch realisieren, dass ein dritter Messpunkt C vorgesehen wird, wobei über ein an der Platte 27 angeordnetes drittes Längenmesssystem 30 der Abstand zwischen dem Messpunkt C und dem Messpunkt S bestimmt wird.

Der Messpunkt C wird dabei so an der Platte 27 angeordnet, dass er nicht in der durch die Punkte A, B und S aufgespannten Ebene liegt. Alternativ kann die Platte 27 mit den Messpunkten A und B auch - wie in Fig. 1 - an dem x-Schlitten 18 verbleiben, während der Messpunkt C auf einer gesonderten Platte vorgesehen wird, die an dem Untergestell 11 befestigt wird.

Die dazu erforderliche geometrische Beziehung ähnelt der in Fig. 2 dargestellten Beziehung, wobei hier die Lage der Abstände A̅S̅, B̅S̅ und C̅S̅ im Raum jetzt für die Berechnung gemäß Fig. 2 in die Ebenen x/y, x/z und y/z projiziert werden.

Aus Genauigkeitsgründen kann es erforderlich sein, die weiteren Messpunkte A, B und C nicht untereinander, also längs der x-Achse, anzuordnen, wie dies in Fig. 7 gezeigt ist, sondern beispielsweise zwei Messpunkte in z-Richtung zueinander auszurichten, wie es in Fig. 1 gezeigt ist, und einen weiteren Messpunkt in x- oder y-Richtung zu einem der beiden ersten Messpunkte anzuordnen.

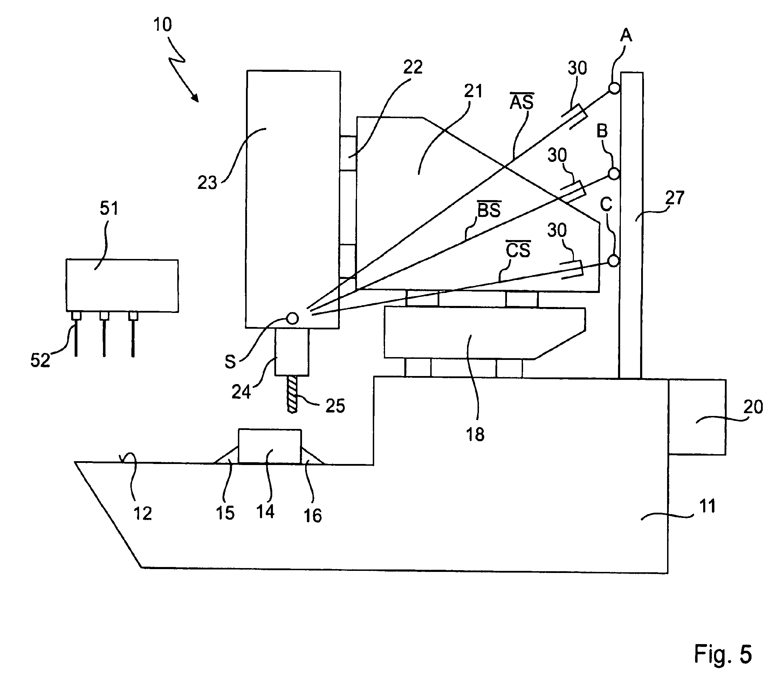

Die Werkzeugmaschine 10 aus Fig. 5 ist mit einem bei 51 schematisch angedeuteten Werkzeugmagazin ausgestattet, das auch bei der Werkzeugmaschine 10 aus Fig. 1vorgesehen sein kann. In diesem Werkzeugmagazin 51 sind Austauchwerkzeuge 52 gespeichert, die in an sich bekannter Weise, z.B. im pick-up Verfahren oder durch Werkzeugwechselarme, im laufenden Betrieb gegen das Werkzeug 25 ausgewechselt werden.

Die Positionsbestimmung für das jeweils eingewechselte Werkzeug 25, 52, bzw. für den Messpunkt S, kann nun einerseits kontinuierlich erfolgen, also parallel und zeitgleich zur Ansteuerung der Werkzugmaschine 10 über die Maschinensteuerung 20. Es ist aber auch eine sporadische Bestimmung der Ist-Position möglich, also nur zu bestimmten Zeitpunkten während der Bearbeitung eines Werkstückes.

Dies kann als zusätzliche Kontrolle für die Position des Werkzeugträgers verwendet werden, oder aber zu bestimmten Zeitpunkten durchgeführt werden, wenn beispielsweise ein Werkzeugwechsel erfolgt. Dann befindet sich die Hauptspindel i.d.R. in einer festgelegten Werkzeugübergabeposition, so dass die Messung schnell und einfach erfolgt und die Berechnung der Ist-Position mathematisch unproblematisch ist. Für viele Anwendungsfälle ist dies hinreichend.

Die Positionsbestimmung über die Längenmesssysteme 30 kann aber auch an bestimmten Positionen während der Bearbeitung erfolgen, wenn bspw. ein besonders genauer Bearbeitungsschritt durchgeführt werden muss. Das erhöht die Genauigkeit, z.B. in der Position einer Bohrung, und kann auch verwendet werden, um die Wiederholgenauigkeit an bestimmten Punkten des Werkstückes zu bestimmen

## Patentansprüche

1. Verfahren zur Bestimmung der Position eines Werkzeuges (25) in einer Werkzeugmaschine (10), die einen Werkstückträger (12) sowie einen über Konstruktionselemente (18, 21, 23) relativ zu dem Werkstückträger (12) und zu einem Maschinenteil (27) verfahrbaren Werkzeugträger (24) aufweist, in den das Werkzeug (25) zur Bearbeitung eines von dem Werkstückträger (12) getragenen Werkstückes (14) eingespannt ist, wobei
an dem Werkzeugträger (24) ein werkzeugnaher Messpunkt (S) und an dem Maschinenteil (27) zumindest zwei weitere Messpunkte (A, B, C) vorgesehen sind,
die relative Position der weiteren Messpunkte (A, B, C) zu einem Koordinatenursprungspunkt (K) bekannt ist, und
die Position des werkzeugnahen Messpunktes (S) zu dem Koordinatenursprungspunkt (K) bestimmt wird,
wobei mit Hilfe von zumindest zwei Längenmeßsystemen (30), der lineare Abstand (A̅S̅, B̅S̅, C̅S̅) zwischen dem werkzeugnahen Messpunkt (S) und jedem der weiteren Messpunkte (A, B, C) gemessen und aus diesen Abständen (A̅S̅, B̅S̅, C̅S̅) sowie der bekannten relativen Position der weiteren Messpunkte (A, B, C) die Position des werkzeugnahen Messpunktes (S) zu dem Koordinatenursprungspunkt (K) bestimmt wird, **dadurch gekennzeichnet, dass** zumindest einem Längenmesssystem (30) ein Fadenelement (29) zugeordnet ist, das an dem werkzeugnahen Messpunkt (S) festgelegt ist und sich zu dem jeweiligen weiteren Messpunkt (A, B, C) erstreckt, wobei die sich jeweils ergebende Länge des Fadenelementes (29) zwischen dem werkzeugnahen Messpunkt (S) und dem jeweiligen weiteren Messpunkt (A, B, C) gemessen wird.

2. Verfahren nach Anspruch 1, **dadurch gekennzeichnet, dass** der Werkzeugträger (24) in einer durch die Messpunkte (S, A, B) aufgespannten Ebene (y, z) relativ zu dem Maschinenteil (27) verfahrbar ist.

3. Verfahren nach Anspruch 2, **dadurch gekennzeichnet, dass** der Werkzeugträger (24) zusammen mit dem Maschinenteil (27) senkrecht (x) zu der durch die Messpunkte (S, A, B) aufgespannten Ebene (y, z) relativ zu dem Werkstückträger (12) verfahrbar ist und zwei Längenmesssysteme (30) vorgesehen sind.

4. Verfahren nach Anspruch 1, **dadurch gekennzeichnet, dass** das Maschinenteil (27) gegenüber dem Werkstückträger (12) unverschieblich an der Werkzeugmaschine (10) angeordnet ist und drei Längenmesssysteme (30) vorgesehen sind.

5. Verfahren nach einem der Ansprüche 1 bis 4, **dadurch gekennzeichnet, dass** der Werkzeugträger (24) relativ zu dem Werkstückträger (12) in drei orthogonalen Achsen (x, y, z)jeweils linear verfahrbar ist.

6. Verfahren zur Bestimmung von Verlagerungen, bspw. infolge thermischer Ausdehnungen oder Lastveränderungen, bei einer Werkzeugmaschine (10), die einen Werkstückträger (12) sowie einen über Konstruktionselemente (18, 21, 23) relativ zu dem Werkstückträger (12) und einem Maschinenteil (27) verfahrbaren Werkzeugträger (24) aufweist, in den ein Werkzeug (25) zur Bearbeitung eines von dem Werkstückträger (12) getragenen Werkstückes (14) eingespannt ist,
bei dem während der Bearbeitung des Werkstückes (14) die Position des Werkzeugträgers (24) gemäß dem Verfahren nach einem der Ansprüche 1 bis 5 bestimmt und die so bestimmte Ist-Position mit einer Soll-Position verglichen wird.

7. Verfahren nach Anspruch 6, **dadurch gekennzeichnet, dass** die Position des Werkzeugträgers zu bestimmten Zeitpunkten bestimmt wird, wenn z.B. ein Werkzeugwechsel durchgeführt oder ein Bearbeitungsvorgang, bspw. eine Bohrung, begonnen wird.

8. Werkzeugmaschine, die einen Werkstückträger (12) sowie einen über Konstruktionselemente (18, 21, 23) relativ zu dem Werkstückträger (12) und einem Maschinenteil (27) verfahrbaren Werkzeugträger (24) aufweist, in den ein Werkzeug (25) zur Bearbeitung eines von dem Werkstückträger (12) getragenen Werkstückes (14) eingespannt ist,
wobei zumindest zwei Längenmesssysteme (30) vorgesehen sind, die unmittelbar den linearen Abstand zwischen einem werkzeugnahen Messpunkt (S) an dem Werkzeugträger und je einem weiteren Messpunkt (A, B, C) an dem Maschinenteil erfassen, **dadurch gekennzeichnet, dass** zumindest einem Längenmesssystem (30) ein Fadenelement (29) zugeordnet ist, das an dem werkzeugnahen Messpunkt (S) festgelegt ist und sich zu dem jeweiligen weiteren Messpunkt (A, B, C) erstreckt, wobei die sich jeweils ergebende Länge des Fadenelementes (29) zwischen dem werkzeugnahen Messpunkt (S) und dem jeweiligen weiteren Messpunkt (A, B, C) gemessen wird.

9. Werkzeugmaschine nach Anspruch 8, **dadurch gekennzeichnet, dass** der Werkzeugträger (24) zusammen mit dem Maschinenteil (27) senkrecht (x) zu der durch die Messpunkte (S, A, B) aufgespannten Ebene (y, z) relativ zu dem Werkstückträger (12) verfahrbar ist und zwei Längenmesssysteme (30) vorgesehen sind.

10. Werkzeugmaschine nach Anspruch 8, **dadurch gekennzeichnet, dass** das Maschinenteil (27) gegenüber dem Werkstückträger (12) unverschieblich an der Werkzeugmaschine (10) angeordnet ist und drei Längenmesssysteme (30) vorgesehen sind.

11. Werkzeugmaschine nach einem der Ansprüche 8 bis 10, **dadurch gekennzeichnet dass** die Längenmesssysteme (30) zumindest teilweise an dem Maschinenteil (27) angeordnet sind.

12. Werkzeugmaschine nach einem der Ansprüche 8 bis 11, **dadurch gekennzeichnet dass** zumindest ein Längenmesssystem (30) einen Seilzugsensor (45) umfasst.

13. Werkzeugmaschine nach einem der Ansprüche 8 bis 12, **dadurch gekennzeichnet, dass** an dem weiteren Messpunkt (A, B, C) das Fadenelement (29) umgelenkt und zu dem Längenmesssystem (34, 41, 45) geführt wird.

14. Werkzeugmaschine nach einem der Ansprüche 8 bis 13, **dadurch gekennzeichnet dass** das Maschinenteil (27) thermisch von der Werkzeugmaschine (10) entkoppelt ist.

## Claims

1. A method for determining the position of a tool (25) in a machine tool (10) comprising a workpiece carrier (12) and a tool holder (24) movable relative to the workpiece carrier (12) and a machine part (27) via constructional elements (18, 21, 23), in which tool holder the tool (25) is clamped in for processing a workpiece (14) supported by the workpiece support (12), wherein
on the tool carrier (24) a near-to-tool measuring point (S) and on the machine part (27) at least two further measuring points (A, B, C) are provided,
the position of the further measurement points (A, B, C) relative to a coordinate origin (K) is known,
and the position of the near-to-tool measuring point (S) relative to the coordinate origin (K) is determined,
wherein by means of at least two length measurement systems (30) the linear distance
(*A̅S̅ B̅S̅ C̅S̅*) between the near-to-tool measuring point (S) and each of the further measuring points (A, B, C) is measured, and wherein from these distances (*A̅S̅ B̅S̅ C̅S̅*) and the known relative position of the further measurement points (A, B, C) the position of the near-to-tool measuring point (S) relative to the coordinate origin (K) is determined,
**characterized in that** at least one length measurement system (30) is associated with a thread element (29) which is attached to the near-to-tool measuring point (S) and extends to the respective further measuring point (A, B, C), the respectively resulting length of the thread element (29) between the near-to-tool measuring point (S) and the respective further measuring point (A, B, C) being measured.

2. Method according to claim 1, **characterized in that** the tool carrier (24) is movable relative to the machine part (27) in a plane (y, z) set up by the measuring points (S, A, B).

3. Method according to claim 2, **characterized in that** together with the machine part (27) the tool carrier (24) is movable relative to the workpiece carrier (12) perpendicular (x) to the plane (y, z) set up by the measuring points (S, A, B), and that two length measurement systems (30) are provided.

4. Method according to claim 1, **characterized in that** the machine part (27) is arranged on the machine tool (10) such as to be not displaceable relative to the workpiece carrier (12), and that three length measurement systems (30) are provided.

5. Method according to any one of claims 1 to 4, **characterized in that** the tool carrier (24) is linearly movable in each of three orthogonal axes (x, y, z) relative to the workpiece carrier (12).

6. A method for determining displacement, for example due to thermal expansion or change of load, in a machine tool (10) comprising a workpiece carrier (12) and a tool holder (24) movable relative to the workpiece carrier (12) and a machine part (27) via constructional elements (18, 21, 23), in which tool holder a tool (25) is clamped in for processing a workpiece (14) supported by the workpiece support (12),
wherein during the machining of the workpiece (14), the position of the tool carrier (24) is determined according to the method of any one of claims 1 to 5, and the real position thus determined is compared with a nominal position.

7. Method according to claim 6, **characterized in that** the position of the tool carrier is determined at certain points in time when for example a tool change is performed or a machining operation, for example a boring, is started.

8. A machine tool comprising a workpiece carrier (12) and a tool holder (24) movable relative to the workpiece carrier (12) and a machine part (27) via constructional elements (18, 21, 23), in which tool holder a tool (25) is clamped in for processing a workpiece (14) supported by the workpiece support (12),
wherein at least two length measurement systems (30) are provided which directly measure the linear distance between a near-to-tool measuring point (S) on the tool carrier and each one further measuring point (A, B , C) on the machine part, **characterized in that** at least one length measurement system (30) is associated with a thread element (29) which is attached to the near-to-tool measuring point (S) and extends to the respective further measuring point (A, B, C), the respectively resulting length of the thread element (29) between the near-to-tool measuring point (S) and the respective further measuring point (A, B, C) being measured.

9. Machine tool according to claim 8, **characterized in that** together with the machine part (27) the tool carrier (24) is movable relative to the workpiece carrier (12) perpendicular (x) to the plane (y, z) set up by the measuring points (S, A, B), and that two length measurement systems (30) are provided.

10. Machine tool according to claim 8, **characterized in that** the machine part (27) is arranged on the machine tool (10) such as to be not displaceable relative to the workpiece carrier (12), and that three length measurement systems (30) are provided.

11. Machine tool according to any one of claims 8 to 10, **characterized in that** the length measurement systems (30) are at least partially arranged on the machine part (27).

12. Machine tool according to any one of claims 8 to 11, **characterized in that** at least one length measurement system (30) comprises a cable sensor (45).

13. Machine tool according to any one of claims 8 to 12, **characterized in that** at the further measuring point (A, B, C) the thread element (29) is deflected and guided to the length measurement system (34, 41, 45).

14. Machine tool according to any one of claims 8 to 13, **characterized in that** the machine part (27) is thermally uncoupled from the machine tool (10).

## Revendications

1. Procédé destiné à déterminer la position d'un outil (25) dans une machine-outil (10) qui présente un support pour pièce à usiner (12) ainsi qu'un porte-outil (24) pouvant être déplacé par rapport au support pour pièce à usiner (12) et à une partie de machine (27) au moyen d'éléments de construction (18, 21, 23), dans lequel l'outil (25) est monté aux fins du traitement d'une pièce à usiner (14) portée par le support pour pièce à usiner (12), dans lequel :
- il est prévu sur le porte-outil (24) un point de mesure proche de l'outil (S) et sur la partie de machine (27) au moins deux points de mesure supplémentaires (A, B, C),
- la position relative des points de mesure supplémentaires (A, B, C) par rapport à un point d'origine de coordonnées (K) est connue, et
- la position du point de mesure proche de l'outil (S) par rapport au point d'origine des coordonnées (K) est déterminée,
dans lequel à l'aide d'au moins deux systèmes de mesure de longueur (30), la distance linéaire (*A̅S̅, B̅S̅, C̅S̅*) entre le point de mesure proche de l'outil (S) et chacun des points de mesure supplémentaires (A, B, C) est mesurée, et à partir de ces distances (*A̅S̅, B̅S̅, C̅S̅*) et de la position relative connue des points de mesure supplémentaires (A, B, C), la position du point de mesure proche de l'outil (S) par rapport au point d'origine des coordonnées (K) est déterminée,
**caractérisé en ce qu'**un élément à fil (29) est adjoint à au moins un système de mesure de longueur (30), lequel élément est fixé au point de mesure proche de l'outil (S) et s'étend jusqu'au point de mesure supplémentaire respectif (A, B, C), étant entendu que la longueur de l'élément à fil (29) qui en résulte à chaque fois est mesurée entre le point de mesure proche de l'outil (S) et le point de mesure supplémentaire respectif (A, B, C).

2. Procédé selon la revendication 1, **caractérisé en ce que** le porte-outil (24) peut être déplacé par rapport à la partie de machine (27) dans un plan (y, z) délimité par les points de mesure (S, A, B).

3. Procédé selon la revendication 2, **caractérisé en ce que** le porte-outil (24) peut être déplacé par rapport au support pour pièce à usiner (12), conjointement avec la partie de machine (27), perpendiculairement (x) au plan (y, z) délimité par les points de mesure (S, A, B) et **en ce que** deux systèmes de mesure de longueur (30) sont prévus.

4. Procédé selon la revendication 1, **caractérisé en ce que** la partie de machine (27) est agencée face au support pour pièce à usiner (12) de façon non coulissante sur la machine-outil (10) et **en ce que** trois systèmes de mesure de longueur (30) sont prévus.

5. Procédé selon l'une des revendications 1 à 4, **caractérisé en ce que** le porte-outil (24) peut être déplacé par rapport au support pour pièce à usiner (12) dans trois axes orthogonaux (x, y, z), à chaque fois de façon linéaire.

6. Procédé destiné à déterminer des déformations, par exemple à la suite d'extensions thermiques ou de modifications des charges, dans une machine-outil (10) qui présente un support pour pièce à usiner (12) ainsi qu'un porte-outil (24) pouvant être déplacé par rapport au support pour pièce à usiner (12) et à une partie de machine (27) au moyen d'éléments de construction (18, 21, 23), dans lequel un outil (25) est monté aux fins du traitement d'une pièce à usiner (14) portée par le support pour pièce à usiner (12),
dans lequel pendant le traitement de la pièce à usiner (14), la position du porte-outil (24) est déterminée au moyen du procédé selon l'une des revendications 1 à 5 et la position effective ainsi déterminée est comparée à une position théorique.

7. Procédé selon la revendication 6, **caractérisé en ce que** la position du porte-outil est déterminée à des moments déterminés, par exemple quand un changement d'outil est réalisé ou quand un processus de traitement, par exemple un alésage, est commencé.

8. Machine-outil qui présente un support pour pièce à usiner (12) ainsi qu'un porte-outil (24) pouvant être déplacé par rapport au support pour pièce à usiner (12) et à une partie de machine (27) au moyen d'éléments de construction (18, 21, 23), dans lequel un outil (25) est monté aux fins du traitement d'une pièce à usiner (14) portée par le support pour pièce à usiner (12),
dans laquelle il est prévu au moins deux systèmes de mesure de longueur (30) qui calculent directement la distance linéaire entre un point de mesure proche de l'outil (S) sur le porte-outil et un point de mesure supplémentaire respectif (A, B, C) sur la partie de machine,
**caractérisée en ce qu'**un élément à fil (29) est adjoint à au moins un système de mesure de longueur (30), lequel élément est fixé au point de mesure proche de l'outil (S) et s'étend jusqu'au point de mesure supplémentaire respectif (A, B, C), étant entendu que la longueur de l'élément à fil (29) qui en résulte à chaque fois est mesurée entre le point de mesure proche de l'outil (S) et le point de mesure supplémentaire respectif (A, B, C).

9. Machine-outil selon la revendication 8, **caractérisée en ce que** le porte-outil (24) peut être déplacé par rapport au support pour pièce à usiner (12), conjointement avec la partie de machine (27), perpendiculairement (x) au plan (y, z) délimité par les points de mesure (S, A, B) et **en ce que** deux systèmes de mesure de longueur (30) sont prévus.

10. Machine-outil selon la revendication 8, **caractérisée en ce que** la partie de machine (27) est agencée face au support pour pièce à usiner (12) de façon non coulissante sur la machine-outil (10) et **en ce que** trois systèmes de mesure de longueur (30) sont prévus.

11. Machine-outil selon l'une des revendications 8 à 10, **caractérisée en ce que** les systèmes de mesure de longueur (30) sont agencés au moins en partie sur la partie de machine (27).

12. Machine-outil selon l'une des revendications 8 à 11, **caractérisée en ce qu'**au moins un système de mesure de longueur (30) comprend un capteur à câble de commande (45).

13. Machine-outil selon l'une des revendications 8 à 12, **caractérisée en ce qu'**au niveau du point de mesure supplémentaire (A, B, C), l'élément à fil (29) est dévié et guidé jusqu'au système de mesure de longueur (34, 41, 45).

14. Machine-outil selon l'une des revendications 8 à 13, **caractérisée en ce que** la partie de machine (27) est dissociée de la machine-outil (10) sur le plan thermique.
